# EUROPÄISCHE PATENTSCHRIFT

(11) **EP 1 361 140 B1**
(45) Veröffentlichungstag und Bekanntmachung des Hinweises auf die Patenterteilung: **25.07.2007**
(21) Anmeldenummer: 03009099.7
(22) Anmeldetag: 19.04.2003
(51) Int. Cl.: B62D 25/08

(54) **Karosserie für ein Kraftfahrzeug**
Motor vehicle body
Carrosserie de véhicule automobile

(30) Priorität: 10.05.2002 DE 10220796
(43) Veröffentlichungstag der Anmeldung: 12.11.2003
(73) Patentinhaber: AUDI AG, 85045 Ingolstadt (DE)
(72) Erfinder: Stegmaier, Jürgen, 71737 Kirchberg (DE); Carle, Klaus-Dieter, 74074 Heilbronn (DE); Mayer, Hubert, 75038 Oberderdingen (DE); Winkler, Andreas, 74074 Heilbronn (DE)
(74) Vertreter: Engelhardt, Harald

(56) Entgegenhaltungen:
- US-A- 2 389 907
- US-A- 2 668 722

## Beschreibung

Die vorliegende Erfindung betrifft eine Karosserie für ein Kraftfahrzeug mit einer unteren Längsträgerebene, einer zweiten oberen Längsträgerebene und einem Hohlprofilrahmen, und einem Tankeinfüllstutzen auf einer Seite des Fahrzeugs, wobei der im Heckbereich des Kraftfahrzeuges angeordnete Hohlprofilrahmen der ersten unteren Längsträgerebene, das heckseitige der zweiten oberen Längsträgerebene und senkrecht zwischen den beiden Längsträgerebenen angeordnete Stützelemente eine käfigartige Versteifungsstruktur bilden.

Aus der US-A 2 389 907 ein Fahrzeug mit Hohlprofilrahmen bekannt, das zwei Längsträgerebenen aufweist, die im Heckbereich über Stützelemente zu einer käfigartigen Versteifungsstruktur verbunden sind. Dieser Stand der Technik enthält keinerlei Angaben über Anordnung und Ausgestaltung des Kofferraumes, ebenso wenig ist die Anordnung und die Lage des Kraftstofftanks und seines Einfüllstutzens dargestellt.

In modernen Fahrzeugen werden Kraftstofftanks derart angeordnet, dass sie im Crashfall möglichst gut gesichert sind. Bei Fahrzeugen mit Frontmotor und einem im hinteren Bereich des Fahrzeugs sich befindlichen Kofferraum ist der Platz in Fahrtrichtung gesehen vor der Hinterachse ein bevorzugter Ort, so dass der Tankeinfüllstutzen, der zur Seitenwand des Fahrzeugs führt, nahe dem Kofferraum verläuft.

Aufgabe der Erfindung ist es, eine zusätzliche Sicherung für den Tankeinfüllstutzen zu schaffen.

Die Aufgabe wird gelöst durch den Hauptanspruch.

Erfindungsgemäß ist vorgesehen, dass in dem Bereich der Fahrgastzelle und Kofferraum Stützelemente positioniert sind, und dass mindestens ein Stützelement in Fahrtrichtung hinter dem Tankeinfüllstutzen angeordnet ist. Dadurch kann der Tankeinfüllstutzen im Falle eines Heckcrashs gegen nach vorne geschleuderte Teile aus dem Kofferraum, z. B. Gepäckstücke oder dort eingebaute Batterien oder Elektronikkomponenten geschützt werden.

In einer bevorzugten Weiterbildung sind auf jeder Seite Stützelemente paarweise angeordnet, wobei eines der Stützelemente vor dem Tankeinfüllstutzen und eines hinter dem Tankeinfüllstutzen verläuft. Der Tankeinfüllstutzen wird somit in Fahrtrichtung nach beiden Seiten durch die Stützelemente abgeschirmt.

Zweckmäßig umgibt der Hohlprofilrahmen der Versteifungsstruktur den Heckklappenausschnitt des Kraftfahrzeuges. Auf diese Weise kann der Hohlprofilrahmen statisch günstig als rundumlaufende bzw. geschlossene Struktur ausgebildet sein und ist der Zugang zu dem Kofferraum des Kraftfahrzeuges dadurch in keiner Weise beeinträchtigt.

Vorteilhaft ist der Hohlprofilrahmen der Versteifungsstruktur im wesentlichen als ein in Fahrtrichtung des Kraftfahrzeuges abgewinkelter Rechteckrahmen ausgebildet, wobei der untere Rahmenabschnitt heckseitig angeordnet ist, der obere Rahmenabschnitt im Bereich zwischen der Fahrgastzelle und dem Kofferraum des Kraftfahrzeuges angeordnet ist und die beiden seitlichen Rahmenabschnitte, welche den unteren Rahmenabschnitt und den oberen Rahmenabschnitt miteinander verbinden, abgewinkelt bzw. gekrümmt ausgebildet sind.

Alternativ könnte der Hohlprofilrahmen der Versteifungsstruktur aber auch als ein schräg zur Fahrtrichtung des Kraftfahrzeuges angeordneter im wesentlichen ebener Rechteckrahmen ausgebildet sein, wobei wiederum der untere Rahmenabschnitt heckseitig angeordnet ist und der obere Rahmenabschnitt im Bereich zwischen der Fahrgastzelle und dem Kofferraum des Kraftfahrzeuges angeordnet ist und die beiden seitlichen Rahmenabschnitte, welche den unteren Rahmenabschnitt und den oberen Rahmenabschnitt miteinander verbinden, gerade ausgebildet sind.

Jedenfalls ist in beiden Fällen ist sichergestellt, dass die bei einem Heckcrash über den Hohlprofilrahmen der käfigartigen Versteifungsstruktur in die Karosserie des Kraftfahrzeuges eingeleiteten Kräfte, sowohl auf die untere Längsträgerebene als auch auf die obere Längsträgerebene verteilt werden.

Gemäß einer anderen Weiterbildung ist das wenigstens eine Stützelement der Versteifungsstruktur, welches die beiden Längsträgerebenen gegeneinander abstützt, im Bereich zwischen der Fahrgastzelle und dem Kofferraum angeordnet, um einen Tankeinfüllstutzen des Kraftfahrzeuges im Falle eines Heckcrashs gegen nach vorne geschleuderte Teile aus dem Kofferraum, wie zum Beispiel Gepäckstücke oder dort eingebaute Batterien und Elektronikkomponenten, zu schützen.

Vorteilhaft besteht die Versteifungsstruktur aus Strangpressprofilen, Gussteilen und/oder Blechteilen. Wichtig ist hierbei lediglich, dass sich aus den jeweiligen Profilen oder Teilen in fertigungstechnischer sowie in statischer Hinsicht günstige Bestandteile der Verstärkungsstruktur, wie z.B. Hohlprofilrahmen, Stützelemente und Verstärkungselemente bilden lassen.

Besonders vorteilhaft erfolgt die Verbindung zwischen dem Hohlprofilrahmen der Versteifungsstruktur und der ersten unteren Längsträgerebene sowie der zweiten oberen Längsträgerebene über Gussteile. Denn mittels Gussteilen ist diese komplexe Anbindung aus fertigungstechnischer Sicht am einfachsten realisierbar.

Die vorliegende Erfindung wird anhand der nachfolgenden Zeichnungsfigur näher erläutert.

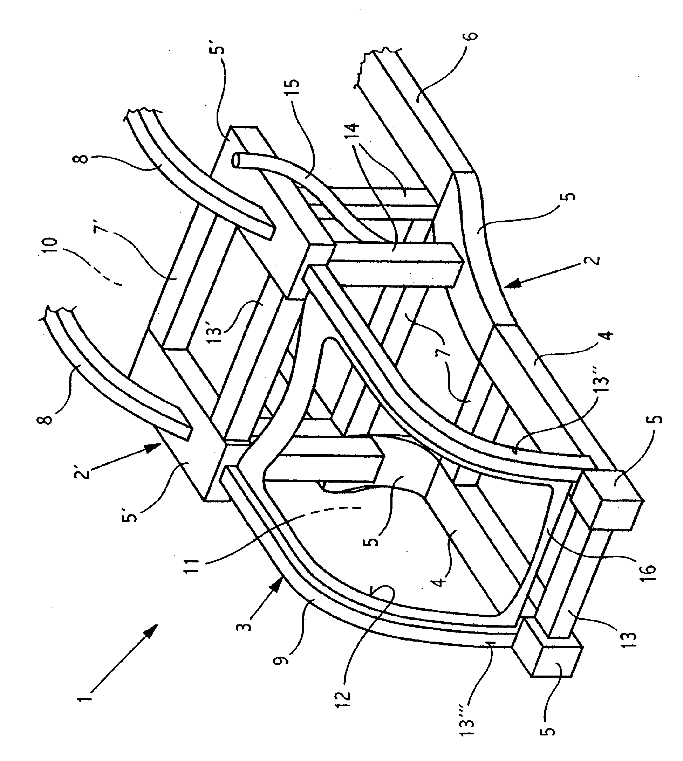

Die einzige Figur zeigt eine perspektivische Teilansicht der Karosserie für ein Kraftfahrzeug mit einer erfindungsgemäßen Versteifungsstruktur in vereinfachter Darstellung.

Die in der Figur gezeigte Teilansicht stellt den hinteren Bereich der Karosserie 1 eines Kraftfahrzeuges dar. Dabei weist die Karosserie 1 eine erste untere Längsträgerebene 2, eine zweite obere Längsträgerebene 2' sowie eine käfigartige Versteifungsstruktur 3 auf.

Die erste untere Längsträgerebene 2 ist, soweit dargestellt aus zwei hinteren Längsträgerprofilen 4, zwei seitlichen Schwellern 6, einer Anzahl von unteren Verbindungselementen 5 sowie aus einer Anzahl von unteren Querträgern 7 gebildet.

Und die zweite obere Längsträgerebene 2' ist, soweit dargestellt aus zwei oberen Verbindungselementen 5', zwei Dachrahmenträgern 8 sowie aus einer Anzahl von oberen Querträgern 7' gebildet.

Die Versteifungsstruktur 3 weist einen geschlossenen Hohlprofilrahmen 9 auf, der sich vom Heck der Karosserie 1 bis zu dem Bereich zwischen der Fahrgastzelle 10 und dem Kofferraum 11 erstreckt. Dabei ist der Hohlprofilrahmen 9 der Versteifungsstruktur 3 so ausgebildet, dass er wie ein abgewinkeltes Rechteck den Heckklappenausschnitt 12 des Kraftfahrzeuges umgibt. Also ist der untere Rahmenabschnitt 13 heckseitig angeordnet, ist der obere Rahmenabschnitt 13' im Bereich zwischen der Fahrgastzelle 10 und dem Kofferraum 11 angeordnet und sind die beiden seitlichen Rahmenabschnitte 13", 13''', welche den unteren Rahmenabschnitt 13' und den oberen Rahmenabschnitt 13' miteinander verbinden, abgewinkelt bzw. gekrümmt ausgebildet.

An den unteren Rahmenabschnitt 13 schließen sich die hinteren Längsträgerprofile 4 der ersten unteren Längsträgerebene 2 an, die sich von dort aus in Fahrtrichtung nach vorne in den unteren Verbindungselementen 5 fortsetzen. Und an den oberen Rahmenabschnitt 13' schließen sich die oberen Verbindungselemente 5' der zweiten oberen Längsträgerebene 2' an.

Die beiden Längsträgerebenen 2, 2' sind im Bereich zwischen der Fahrgastzelle 10 und dem Kofferraum 11 durch eine Anzahl von im wesentlichen senkrecht stehenden Stützelementen 14 gegeneinander abgestützt. Diese Stützelemente 14 dienen zum einen dazu, die von den nicht dargestellten Federbeinen des Kraftfahrzeuges in die Karosserie 1 eingeleitete Energie aufzunehmen und dienen zum anderen dazu, einen seitlichen Tankeinfüllstutzen 15 des Kraftfahrzeuges bei einem Heckcrash zu schützen.

Außerdem weist die Versteifungsstruktur 3 ein ringförmiges Verstärkungselement 16 auf, welches den Holprofilrahmen 9 verstärkt. Dieses Verstärkungselement 16 dient insbesondere beim Einsatz einer nicht dargestellten Anhängerkupplung zur Erhöhung der Steifigkeit des Heckklappenausschnitts 12 des Kraftfahrzeuges.

Demnach bilden der Hohlprofilrahmen 9, die Längsträgerprofile 4, die unteren Verbindungselemente 5, die oberen Verbindungselemente 5', die seitlichen Stützelemente 14 und ggf. das ringförmige Verstärkungselement 16 im Bereich des Kofferraumes 11 des Kraftfahrzeuges die käfigartige Versteifungsstruktur 3 aus.

Die in der Figur dargestellte Karosserie 1 mit der käfigartigen Versteifungsstruktur 3 besteht aus Strangpressprofilen, Gussteilen und Blechteilen, wobei die Längsträger 4, die Schweller 6, die Querträger 7, die Dachrahmenträger 8, der Hohlprofilrahmen 9 und das Stützelement 14 als Strangpressprofile ausgebildet sind, die Verbindungselemente 5, 5' als Gussteile ausgebildet sind und das Verstärkungselement 16 als Blechteil ausgebildet ist.

### Liste der Bezugszeichen

- 1: Karosserie
- 2, 2': Längsträgerebene
- 3: Versteifungsstruktur
- 4: Längsträger
- 5, 5': Verbindungselemente
- 6: Schweller
- 7, 7': Querträger
- 8: Dachrahmenträger
- 9: Hohlprofilrahmen
- 10: Fahrgastzelle
- 11: Kofferraum
- 12: Heckklappenausschnitt
- 13, 13', 13", 13"': Rahmenabschnitt
- 14: Stützelement
- 15: Tankeinfüllstutzen
- 16: Verstärkungselement

## Patentansprüche

1. Karosserie für ein Kraftfahrzeug mit einer ersten unteren Längsträgerebene (2) einer zweiten oberen Längsträgerebene (2') und einem Hohlprofilrahmen (9), und einem Tankeinfüllstutzen (15) auf einer Seite des Fahrzeugs, wobei der im Heckbereich des Kraftfahrzeuges angeordnete Hohlprofilrahmen, das heckseitige Ende der ersten unteren Längsträgerebene, das heckseitige Ende der zweiten oberen Längsträgerebene und senkrecht zwischen den beiden Längsträgerebenen angeordnete Stützelemente (14) eine käfigartige Versteifungsstruktur (3) bilden,
**dadurch gekennzeichnet, dass**
die Stützelemente (14) im Bereich zwischen Fahrgastzelle (10) und rückwartigem Kofferraum (11) positioniert sind, und dass mindestens ein Stützelement (14) auf der Seite des Tankeinfüllstutzens (15) in Fahrtrichtung hinter dem Tankeinfüllstutzen (15) angeordnet ist.

2. Karosserie nach Anspruch 1, **dadurch gekennzeichnet, dass** die Stützelemente (14) auf beiden Seiten des Kraftfahrzeuges paarweise angeordnet sind und auf der Seite des Tankeinfüllstutzens vor und hinter dem Tankeinfüllstutzens (15) positioniert sind.

3. Karosserie nach Anspruch 1, **dadurch gekennzeichnet, dass** der Hohlprofilrahmen (9) der Versteifungsstruktur (3) den Heckklappenausschnitt (12) des Kraftfahrzeuges umgibt.

4. Karosserie nach Anspruch 1 oder 2, **dadurch gekennzeichnet, dass** der Hohlprofilrahmen (9) der Versteifungsstruktur (3) im wesentlichen als ein in Fahrtrichtung des Kraftfahrzeuges abgewinkelter Rechteckrahmen ausgebildet ist, wobei der untere Rahmenabschnitt (13) heckseitig angeordnet ist, der obere Rahmenabschnitt (13') im Bereich zwischen der Fahrgastzelle (10) und dem Kofferraum (11) des Kraftfahrzeuges angeordnet ist, und die beiden seitlichen Rahmenabschnitte (13", 13'''), welche den unteren Rahmenabschnitt (13) und den oberen Rahmenabschnitt (13') miteinander verbinden, abgewinkelt bzw. gekrümmt ausgebildet sind.

5. Karosserie nach Anspruch 1 oder 2, **dadurch gekennzeichnet, dass** der Hohlprofilrahmen (9) der Versteifungsstruktur (3) im wesentlichen als ein in Fahrtrichtung des Kraftfahrzeuges schräg angeordneter im wesentlichen ebener Rechteckrahmen ausgebildet ist, wobei der untere Rahmenabschnitt (13) heckseitig angeordnet ist, der obere Rahmenabschnitt (13') im Bereich zwischen der Fahrgastzelle (10) und dem Kofferraum (11) des Kraftfahrzeuges angeordnet ist, und die beiden seitlichen Rahmenabschnitte (13", 13'''), welche den unteren Rahmenabschnitt (13) und den oberen Rahmenabschnitt (13') miteinander verbinden, gerade ausgebildet sind.

6. Karosserie nach einem der Ansprüche 1 bis 4, **dadurch gekennzeichnet, dass** der Hohlprofilrahmen (9) der Versteifungsstruktur (3) ein ringförmig ausgebildetes Verstärkungselement (16) aufweist.

7. Karosserie nach einem der Ansprüche 1 bis 6, **dadurch gekennzeichnet, dass** die Versteifungsstruktur (3) aus Strangpressprofilen, Gussteilen und/oder Blechteilen besteht.

8. Karosserie nach einem der Ansprüche 1 bis 7, **dadurch gekennzeichnet, dass** die Verbindung zwischen dem Hohlprofilrahmen (9) und der ersten unteren Längsträgerebene (2) sowie der zweiten oberen Längsträgerebene (2') über Gussteile erfolgt.

## Claims

1. Motor vehicle body with a first lower side member flat (2), a second upper side member flat (2') and a hollow section frame (9) and a tank filling pipe (15) on one side of the vehicle, in which the hollow profile section arranged at the rear of the vehicle, the rear end of the first lower side member flat, the rear end of the second upper side member flat and support element (14) arranged vertically between both side member flats form a cage type stiffening structure (3),
**characterised in that**
the support elements (14) are positioned in the area between the passenger cell (10) and the rear boot (11) and that at least one support element (14) is arranged on the side of the tank filling pipe (15) behind the tank filling pipe (15) in the direction of travel.

2. Body according to claim 1, **characterised in that** the support elements (14) are arranged on both sides of the vehicle in pairs and are positioned on the side of the tank filling pipe in front and behind the tank filling pipe (15).

3. Body according to claim 1, **characterised in that** the hollow section frame (9) of the stiffening structure (3) surrounds the tailgate section (12) of the vehicle.

4. Body according to claim 1 or 2, **characterised in that** the hollow section frame (9) of the stiffening structure (3) is made essentially as a rectangular frame bent in the direction of travel of the vehicle, in which the lower frame section (13) is arranged at the rear, the upper frame section (13') in the area between the passenger cell (10) and the boot (11) of the vehicle, and both side frame sections (13", 13""), which connect the lower frame section (13) and the upper frame section (13') to each other, are made bent or curved.

5. Body according to claim 1 or 2, **characterised in that** the hollow section frame (9) of the stiffening structure (3) is made essentially as a flat, rectangular frame arranged sloping in the direction of travel of the vehicle, in which the lower frame section (13) is arranged at the rear, the upper frame section (13') in the area between the passenger cell (10) and the boot (11) of the vehicle, and both side frame sections (13", 13""), which connect the lower frame section (13) and the upper frame section (13') to each other, are made straight.

6. Body according to one of claims 1 to 4, **characterised in that** the hollow section frame (9) of the stiffening structure (3) has a reinforcing element (16) made in the shape of a ring.

7. Body according to one of claims 1 to 6, **characterised in that** the stiffening structure (3) consists of extruded sections, castings and/or sheet metal parts.

8. Body according to one of claims 1 to 7, **characterised in that** the connection between the hollow section frame (9) and the first lower side member flat (2) and the second upper side member flat (2') is made of castings.

## Revendications

1. Carrosserie pour un véhicule automobile avec un premier plan de longeron inférieur (2), un second plan de longeron supérieur (2') et un cadre à profilés creux (9), et une tubulure de remplissage du réservoir (15) sur un côté du véhicule automobile, le cadre à profilés creux - disposé à l'arrière du véhicule automobile -, l'extrémité arrière du premier plan de longeron inférieur, l'extrémité arrière (14) du second plan de longeron supérieur et des éléments d'appui disposés verticalement entre les deux plans de longerons formant une structure de renforcement en forme de cage (3)
**caractérisée en ce que**
les éléments d'appui (14) sont positionnés dans le secteur entre l'habitacle des passagers (10) et le coffre à bagages (11) à l'arrière, et qu'au moins un élément d'appui (14) est disposé sur le côté de la tubulure de remplissage du réservoir (15) dans le sens de conduite derrière la tubulure de remplissage du réservoir (15).

2. Carrosserie selon la revendication 1, **caractérisée en ce que** les éléments d'appui (14) sont disposés par paire des deux côtés du véhicule automobile et sont positionnés sur le côté de la tubulure de remplissage du réservoir (15) devant et derrière la tubulure de remplissage du réservoir (15).

3. Carrosserie selon la revendication 1, **caractérisée en ce que** le cadre à profilés creux (9) de la structure de renforcement (3) entoure la section du hayon arrière (12) du véhicule automobile.

4. Carrosserie selon la revendication 1 ou 2, **caractérisée en ce que** le cadre à profilés creux (9) de la structure de renforcement (3) est principalement développé sous forme d'un cadre rectangulaire coudé dans le sens du véhicule automobile, la section inférieure du cadre (13) étant disposée sur le côté arrière, la section supérieure du cadre (13') étant disposée dans le secteur entre l'habitacle des passagers (10) et le coffre à bagages (11) du véhicule automobile et les deux sections latérales du cadre (13", 13"'), qui relient ensemble la section inférieure (13) et la section supérieure du cadre (13'), sont développées en étant coudées ou selon le cas courbées.

5. Carrosserie selon la revendication 1 ou 2, **caractérisée en ce que** le cadre à profilés creux (9) de la structure de renforcement (3) est développé essentiellement sous forme d'un cadre rectangulaire plan disposé principalement diagonalement par rapport au sens de conduite du véhicule automobile, la section inférieure du cadre (13) étant disposée sur le côté arrière et la section supérieure du cadre (13') dans le secteur entre l'habitacle des passagers (10) et le coffre à bagages (11) du véhicule automobile et les deux sections latérales du cadre (13", 13"'), qui relient ensemble la section inférieure (13) et la section supérieure (13') du cadre, sont développées en étant rectilignes.

6. Carrosserie selon les revendications 1 à 4, **caractérisée en ce que** le cadre à profilés creux (9) de la structure de renforcement (3) présente un élément de renforcement (16) ayant une forme annulaire.

7. Carrosserie selon les revendications 1 à 6, **caractérisée en ce que** la structure de renforcement (3) est constituée de profilés extrudées, d'éléments en fonte et / ou d'éléments en tôle.

8. Carrosserie selon les revendications 1 à 7, **caractérisée en ce que** le raccordement entre le cadre à profilés creux (9) et le premier plan de longeron inférieur (2) ainsi que le second plan de longeron supérieur (2') est réalisé au moyen d'éléments en fonte.
